# EUROPÄISCHE PATENTANMELDUNG

(11) **EP 2 662 552 A1**
(43) Veröffentlichungstag der Anmeldung: **13.11.2013**
(21) Anmeldenummer: 12003581.1
(22) Anmeldetag: 08.05.2012
(51) Int. Cl.: F02C 6/16

(54) **Verfahren und Vorrichtung zur Erzeugung elektrischer Energie**

(71) Anmelder: Linde Aktiengesellschaft, 80331 München (DE)
(72) Erfinder: Alekseev, Alexander, Dr., 82515 Wolfratshausen (DE)
(74) Vertreter: Imhof, Dietmar

(57) **Zusammenfassung**

Das Verfahren und die Vorrichtung dienen zur Erzeugung elektrischer Energie in einem kombinierten System aus Gasturbinen-Kraftwerk und Luftbehandlungsanlage (2), wobei das Gasturbinen- Kraftwerk ein Gasturbinen-System mit Gasturbinen-Luftverdichter, Brennkammer, Gasturbinen-Expander und Generator aufweist. In einem ersten Betriebsmodus wird in der Luftbehandlungsanlage aus Einsatzluft (1) ein Speicherfluid hergestellt, das weniger als 40 mol% Sauerstoff enthält; das Speicherfluid wird als tiefkalte Flüssigkeit (3) in einem Flüssigtank (4) gespeichert. In einem zweiten Betriebsmodus wird tiefkalte Flüssigkeit (5) aus dem Flüssigtank (4) entnommen und unter überatmosphärischem Druck verdampft oder pseudo-verdampft (8); aus dem dabei erzeugten gasförmigen Hochdruck-Speicherfluid (10, 11) wird mechanische Energie erzeugt, wobei mindestens ein Teil der erzeugten mechanischen Energie in elektrische Energie (105) umgewandelt wird. In dem ersten Betriebsmodus wird ein Teil der in dem Gasturbinen-Luftverdichter erzeugten Druckluft als Einsatzluft in der Luftbehandlungsanlage eingesetzt.

## Beschreibung

Die Erfindung betrifft ein Verfahren und Vorrichtung zur Erzeugung von elektrischer Energie gemäß dem Oberbegriff des Patentanspruchs 1 sowie eine entsprechende Vorrichtung.

Unter einer "tiefkalten Flüssigkeit" wird eine Flüssigkeit verstanden, deren Siedepunkt unterhalb der Umgebungstemperatur liegt und beispielsweise bei 200 K oder niedriger, insbesondere niedriger als 220 K liegt.

Die tiefkalte Flüssigkeit kann beim "Verdampfen" unter unterkritischem Druck stehen. Falls die tiefkalte Flüssigkeit aber auf einen überatmosphärischen Druck gebracht wird, der oberhalb des kritischen Drucks liegt, findet kein echter Phasenübergang ("Verdampfen"), sondern eine so genannte "Pseudo-Verdampfung" statt.

Ein "Gasturbinen-System" weist eine Gasturbine (Gasturbinen-Expander), einen von der Gasturbine angetriebenen Gasturbinen-Verdichter und eine Brennkammer auf. In der Gasturbine werden heiße Gase aus der Brennkammer arbeitsleistend entspannt. Ein Teil der dabei erzeugten mechanischen Energie wird zum Antrieb des Gasturbinen-Verdichters eingesetzt. Ein weiterer Teil wird regelmäßig zur Erzeugung elektrischer Energie in einem Generator umgesetzt.

Es sind Verfahren und Vorrichtungen bekannt, die Flüssigluft oder Flüssigstickstoff zur Netzregelung und Bereitstellung von Regelleistung in Stromnetzen verwenden. Zu Billigstromzeiten wird dabei die Umgebungsluft in einer Luftzerlegungsanlage mit integriertem Verflüssiger oder in einer separaten Verflüssigungsanlage verflüssigt und in einem als Tieftemperaturspeicher ausgebildeten Flüssigtank gespeichert. Zu Spitzenlastzeiten wird die verflüssigte Luft aus dem Speicher entnommen, in einer Pumpe auf den höheren Druck gebracht, danach bis auf etwa Umgebungstemperatur oder höher angewärmt. Diese warme Hochdruckluft wird danach in einer Entspannungseinheit bestehend aus einer oder mehreren Turbinen mit Zwischenerwärmungen bis auf Umgebungsdruck entspannt. Die in der Turbineneinheit erzeugte mechanische Energie wird in einem Generator in elektrische Energie umgewandelt und als besonders wertvolle Energie ins elektrische Netz eingespeist. Ein derartiges System ist in WO 2007096656 beschrieben.

Solche Verfahren können, wie auch das Verfahren der Erfindung, grundsätzlich auch mit einem Speicherfluid durchgeführt werden, das 40 mol-% oder mehr Sauerstoff enthalten. Letzteres wurde hier jedoch ausgenommen, um eine Verwechslung mit Systemen zu vermeiden, bei denen ein besonders sauerstoffreiches Fluid zur Unterstützung von Oxidationsreaktionen in das Gasturbinen-System eingeleitet wird.

Der Erfindung liegt die Aufgabe zugrunde, ein derartiges System hinsichtlich seiner Wirtschaftlichkeit zu verbessern und insbesondere hinsichtlich des Wirkungsgrads.

Diese Aufgabe wird durch die kennzeichnenden Merkmale des Patentanspruchs 1 gelöst. Gemäß der Erfindung wird also während des ersten Betriebsmodus zur Erzeugung des Speicherfluids in der Luftbehandlungsanlage Druckluft aus dem Gasturbinen-System als Einsatzluft eingesetzt. Entsprechend weniger Einsatzluft muss mittels eines oder mehrerer dedizierter Luftverdichter auf Druck gebracht werden; die entsprechende Energie für die Verdichtung von Einsatzluft wird eingespart. Damit steht mehr Energie für die Erzeugung und Lieferung von elektrischer Energie zur Verfügung, und der Wirkungsgrad des Gesamtsystems steigt entsprechend.

Im Extremfall wird die gesamte Einsatzluft für die Luftbehandlungsanlage von der Gasturbine geliefert. Der dedizierte Luftverdichter entfällt dann vollständig.

Im Rahmen der Erfindung wird in dem zweiten Betriebsmodus mechanische Energie aus dem Hochdruck-Speicherfluid erzeugt, indem entweder das Speicherfluid selbst oder ein aus ihm abgeleitetes Fluid arbeitsleistend entspannt wird. Das abgeleitete Fluid kann beispielsweise durch ein Gemisch des Speicherfluids mit einem oder mehreren anderen Fluiden gebildet werden, oder durch ein Reaktionsprodukt des Speicherfluids mit einem oder mehreren anderen Stoffen. Letzteres kann beispielsweise durch Verbrennungsabgas gebildet werden, wenn das Speicherfluid Sauerstoff enthält und zur Verbrennung eines Brennstoffs genutzt wird.

In einer ersten Variante des erfindungsgemäßen Verfahrens wird in dem zweiten Betriebsmodus mindestens ein Teil der Erzeugung mechanischer Energie aus dem gasförmigen Hochdruck-Speicherfluid in dem Gasturbinen-Expander eines Gasturbinen-Systems eines Gasturbinen-Kraftwerks durchgeführt, wobei das Speicherfluid stromabwärts des Verdampfens dem Gasturbinen-System zugeleitet wird. Diese Nutzung des Gasturbinen-Systems selbst für die Gewinnung von Energie aus dem Hochdruck-Speicherfluid wird in den Patentansprüchen 5 und 6 sowie in der älteren deutschen Patentanmeldung 102011121011 und den dazu korrespondierenden Patentanmeldungen näher beschrieben.

Mindestens ein Teil der Erzeugung mechanischer Energie aus dem gasförmigen Hochdruck-Speicherfluid wird bei dieser Variante in dem Gasturbinen-System des Kraftwerks vorgenommen, also in einem im Kraftwerk ohnehin vorhandenen Apparat zur Umsetzung von Druckenergie in mechanische Antriebsenergie. Ein zusätzliches separates System zur arbeitsleistenden Entspannung des Hochdruck-Speicherfluids kann im Rahmen der Erfindung weniger aufwändig ausgebildet sein oder ganz entfallen. Im einfachsten Fall kann bei der Erfindung die gesamte Erzeugung von mechanischer Energie aus dem gasförmigen Hochdruck-Speicherfluid in dem Gasturbinen-System vorgenommen werden. Das Hochdruck-Speicherfluid wird dann zum Beispiel unter dem Druck, unter dem es (pseudo-)verdampft wird, dem Gasturbinen-System zugeleitet.

In einer zweiten Variante wird die Erzeugung mechanischer Energie aus dem gasförmigen Hochdruck-Speicherfluid mindestens teilweise als arbeitsleistende Entspannung in einem Heißgasturbinen-System durchgeführt, das mindestens einen Erhitzer und eine Heißgasturbine aufweist. Hierbei findet die Erzeugung von Energie aus dem Hochdruck-Speicherfluid außerhalb des Gasturbinen-Systems statt.

Das "Heißgasturbinen-System" kann einstufig mit einem Erhitzer und einer einstufigen Turbine ausgebildet sein. Alternativ kann es mehrere Turbinen-Stufen, vorzugsweise mit Zwischenerhitzung, aufweisen. In jedem Fall ist es sinnvoll, hinter der letzen Stufe des Heißgasturbinen-Systems einen weiteren Erhitzer vorzusehen. Das Heißgasturbinen-System ist vorzugsweise mit einem oder mehreren Generatoren zur Erzeugung elektrischer Energie gekoppelt.

Unter "Erhitzer" wird hier ein System zum indirekten Wärmeaustausch zwischen einem Heizfluid und dem gasförmigen Speicherfluid verstanden. Hiermit kann Restwärme oder Abwärme auf das Speicherfluid übertragen und zur Energieerzeugung im Heißgasturbinen-System genutzt werden.

In einer dritten Variante der Erfindung werden die beiden ersten Varianten kombiniert, indem die Erzeugung mechanischer Energie aus dem gasförmigen Hochdruck-Speicherfluid in zwei Schritten vorgenommen wird, wobei der erste Schritt als arbeitsleistende Entspannung in einem Heißgasturbinen-System durchgeführt wird und der zweite Schritt durch das Gasturbinen-System gebildet wird, wobei das gasförmige Hochdruck-Speicherfluid dem Heißgasturbinen-System zugeleitet und dort auf einen Zwischendruck entspannt wird, und dem Heißgasturbinen-System ein gasförmiges Zwischendruck-Speicherfluid entnommen, das schließlich dem Gasturbinen-System zugeleitet wird.

Die Luftbehandlungsanlage, in welcher im ersten Betriebsmodus die tiefkalte Flüssigkeit erzeugt wird, kann als Tieftemperatur-Luftzerlegungsanlage oder als Luftverflüssigungsanlage ausgebildet sein.

Eine "Tieftemperatur-Luftzerlegungsanlage" wird mit atmosphärischer Luft beschickt und weist ein Destillationssäulen-System zur Zerlegung atmosphärischer Luft in ihre physikalischen Komponenten auf, insbesondere in Stickstoff und Sauerstoff. Hierzu wird die Einsatzluft zunächst in die Nähe ihres Taupunkts abgekühlt und dann in das Destillationssäulen-System eingeleitet.

Verfahren und Vorrichtungen zur Tieftemperaturzerlegung von Luft sind zum Beispiel aus Hausen/Linde, Tieftemperaturtechnik, 2. Auflage 1985, Kapitel 4 (Seiten 281 bis 337) bekannt.

Das Destillationssäulen-System der Erfindung kann als Ein-Säulen-System zur Stickstoff-Sauerstoff-Trennung ausgebildet sein, als Zwei-Säulen-System (zum Beispiel als klassisches Linde-Doppelsäulensystem), oder auch als Drei- oder Mehr-Säulen-System. Es kann zusätzlich zu den Kolonnen zur Stickstoff-Sauerstoff-Trennung weitere Vorrichtungen zur Gewinnung hochreiner Produkte und/oder anderer Luftkomponenten, insbesondere von Edelgasen aufweisen, beispielsweise eine Argongewinnung und/oder eine Krypton-Xenon-Gewinnung.

Eine "Luftverflüssigungsanlage" enthält keinen Destillationssäulen-Teil. Im Übrigen entspricht ihr Aufbau dem einer Tieftemperatur-Luftzerlegungsanlage mit der Abgabe eines Flüssigprodukts. Selbstverständlich kann auch in einer Tieftemperatur-Luftzerlegungsanlage Flüssigluft als Nebenprodukt erzeugt werden.

Die tiefkalte Flüssigkeit kann durch verflüssigte Luft, und/oder Flüssigluft gebildet werden, oder allgemein durch ein Fluid, das weniger Sauerstoff als die atmosphärische Luft enthält. Auch eine Kombination zweier oder mehrerer Speicherfluide gleicher oder unterschiedlicher Zusammensetzung aus der gleichen Luftbehandlungsanlage oder aus einer Mehrzahl von Luftbehandlungsanlagen kann im Rahmen der Erfindung eingesetzt werden.

Unter "Stickstoff" wird hier sowohl reiner oder im Wesentlichen reiner Stickstoff verstanden als auch ein Gemisch aus Luftgasen, dessen Stickstoffgehalt höher als derjenige der atmosphärischen Luft ist. Zum Beispiel weist der Flüssigstickstoff einen Stickstoffgehalt von mindestens 90 %, vorzugsweise mindestens 99 %. (Alle Prozentangaben beziehen sich hier und im Folgenden auf die molare Menge, soweit nichts anderes angegeben ist.)

Die Erfindung betrifft außerdem eine Vorrichtung zur Erzeugung von Energie gemäß Patentanspruch 9. Die erfindungsgemäße Vorrichtung kann durch Vorrichtungsmerkmale ergänzt werden, die den Merkmalen der abhängigen Verfahrensansprüche entsprechen.

Die Erfindung sowie weitere Einzelheiten der Erfindung werden im Folgenden anhand von in den Zeichnungen dargestellten Ausführungsbeispielen näher erläutert. Hierbei zeigen:
- Figur 1a: eine Ausführungsform der Erfindung gemäß der oben beschriebenen dritten Variante das Grundprinzip der Erfindung im ersten Betriebsmodus,
- Figur 1b: das System der Figur 1a während des zweiten Betriebsmodus und
- Figuren 2 und 3: verschiedenen Ausführungsformen der Zuspeisung in das Gasturbinen-System.

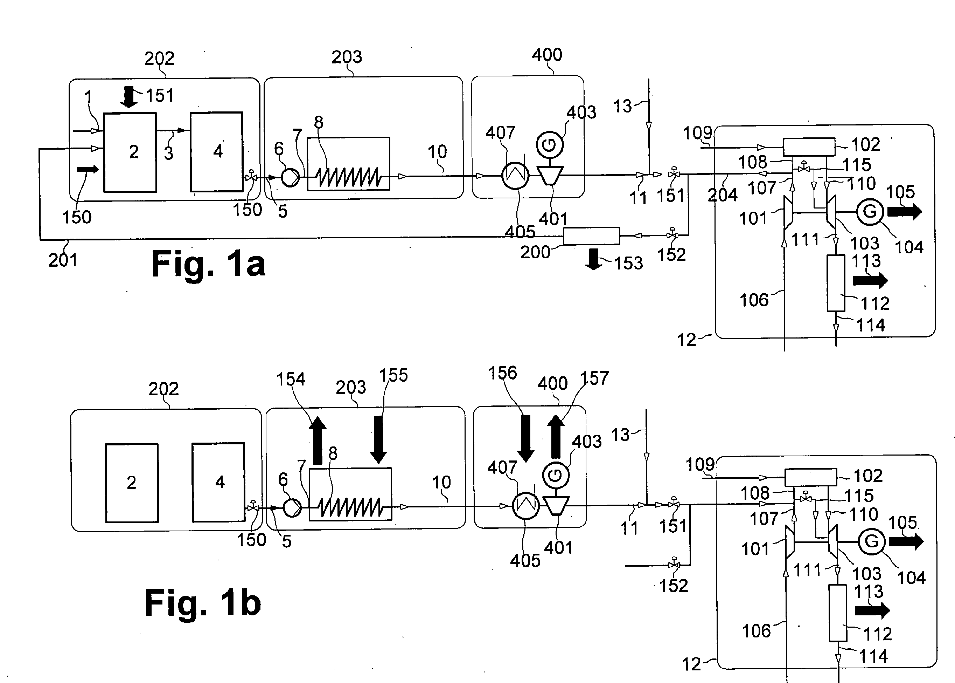

In **Figur 1a** wird aus Einsatzluft 1, 201 in einer Luftbehandlungsanlage 2 Flüssigluft 3 erzeugt. Die Luftbehandlungsanlage 2 ist hier als Luftverflüssigungsanlage ausgebildet. Ein erster Teil 1 der Einsatzluft stammt von einem dedizierten Luftverdichter (nicht dargestellt) und steht untere einem ersten Druck von beispielsweise 5 bis 40 bar. Die übrige Einsatzluft wird als zweiter Teil 201 von dem Gasturbinen-Kraftwerk 12 geliefert, das unten näher beschrieben wird, und steht unter einem zweiten, höheren Druck von beispielsweise 10 bis 40 bar.

Die Flüssigluft steht in dem Ausführungsbeispiel unter etwa atmosphärischem Druck und wird als "tiefkalte Flüssigkeit" 3 in einen Flüssigtank 4 eingeleitet, der als Tieftemperaturspeicher ausgebildet ist. (Alternativ kann die tiefkalte Flüssigkeit unter einem höheren Druck erzeugt beziehungsweise gespeichert werden, beispielsweise bei 6 bis 16 bar, oder auch bei höherem Druck, falls das die Behälterbauweise erlaubt.)

Das Verdampfungssystem 203 und das Heißgasturbinen-System 400 sind im ersten Betriebsmodus außer Betrieb. Die Ventile 150 und 151 sind geschlossen, das Ventil 152 ist geöffnet.

Das Gasturbinen-Kraftwerk 12 weist ein Gasturbinen-System aus Gasturbinen-Verdichter 101, Brennkammer 102 und Gasturbinen-Expander (im Folgenden auch Gasturbine genannt) 103 auf. Der Verdichter 101 und die Gasturbine 103 sind sowohl untereinander mechanisch gekoppelt als auch mit einem Generator 104 zur Erzeugung elektrischer Energie 105.

In dem üblichen Gasturbinen-Prozess wird atmosphärische Luft 106 in dem Gasturbinen-Verdichter 101 auf den Brennkammerdruck von beispielsweise 15 bar verdichtet und über die Leitungen 107 und 108 der Brennkammer 102 zugeführt. Dort dient sie als Oxidationsmittel für die Verbrennung eines Brennstoffs 109, der aus Erdgas, Synthesegas aus einer Vergasung oder aus jedem anderen geeigneten Stoff, insbesondere aus einem flüssigen oder gasförmigen Kohlenwasserstoffgemisch besteht.

Das heiße Verbrennungsabgas 110 wird im Gasturbinen-Expander 103 arbeitsleistend auf etwa Umgebungsdruck entspannt. Das entspannte Verbrennungsabgas 111 wird gegebenenfalls einem Dampferzeugungssystem 112 zur Rückgewinnung von Abwärme zugeleitet, das wiederum elektrische Energie oder mechanische Antriebsenergie 113 erzeugt. Anschließend wird es - nach entsprechender Reinigung - über Leitung 114 in die Atmosphäre abgeblasen.

Ein Teil der im Verdichter verdichteten Luft wird bei modernen Gasturbinen zur Kühlung der Schaufeln des Gasturbinen-Expanders verwendet, da diese durch unmittelbaren Kontakt mit bis zu 1400°C heißem Gas aus der Brennkammer thermischen Beanspruchungen ausgesetzt sind. Diese Teilluftmenge (Kühlluft) wird dann nicht über die Brennkammer geführt, sondern am Austritt aus dem Verdichterteil entnommen und durch Kanäle innerhalb von Schaufeln geführt. Die Kühlluft strömt durch die Öffnungen an der vorderen Schaufelkante und anderen Stellen aus. Dadurch bildet sich an der Oberfläche der Turbinenschaufeln eine Kaltluftschutzschicht. Diese Luftmenge nimmt am arbeitsleisteriden Entspannungsprozess nicht unmittelbar teil, dennoch wird aus ihr mechanische Energie gewonnen. Die oben genannten Kanäle, die direkt vom Verdichteraustritt in den Gasturbinen-Expander führen, sind in Figur 1 als Bypass-Leitung 115 dargestellt. Über diese Bypass-Leitung 115 kann ein Teil der Hochdruckluft 107 zur Schaufelkühlung direkt in den Gasturbinen-Expander eingeleitet werden.

Erfindungsgemäß wird ein Teil 204 der ein Teil der im Gasturbinen-Verdichter 101 erzeugten Hochdruckluft 107 aus dem Gasturbinen-Kraftwerk 12 entfernt und nach Abkühlung durch indirekten Wärmeaustausch in einem Luftkühler 200 über Leitung 201 der Luftbehandlungsanlage als Einsatzluft zugeführt.

In dem ersten Betriebsmodus fließen bei dem Ausführungsbeispiel die folgenden Energieströme in das System beziehungsweise aus dem System:
- Energie 150 zum Antrieb der Verdichter der Luftbehandlungsanlage
- Kälte 151 zur Verflüssigung des zu speichernden Speicherfluids 3
- Wärme 153 vom Luftkühler 200
- Elektrische Energie 105 vom Generator 104 der Gasturbine
- Dampf aus dem Dampferzeugungssystem, der in Dampfturbinen in mechanische und weiter in elektrische Energie umgewandelt werden kann.

**Figur 1b** stellt den zweiten Betriebsmodus dar, der vorzugsweise zu Spitzenlastzeiten gefahren wird. In dieser Betriebsweise wird dem Flüssigtank 4 tiefkalte Flüssigkeit 5 entnommen und in einer Pumpe 6 auf einen überatmosphärischen Druck von beispielsweise 40 bis 100 bar gebracht. Das tiefkalte Hochdruckfluid 7 wird in einem Verdampfer-System 8 in Wärmeaustausch mit einer Wärmequelle 9 (pseudo-)verdampft, um ein gasförmiges Hochdruck-Speicherfluid 10 zu bilden, das in diesem konkreten Ausführungsbeispiel aus Hochdruckluft besteht.

Das Verdampfer-System kann aus einem oder mehreren Apparaten wie Wärmetauschern und Wärmespeichern bestehen. Die Wärmequelle kann aus dem Speichermedium eines Wärmespeichers bestehen, mit dem das Hochdruck-Speicherfluid in direkten Wärmeaustausch tritt. Alternativ wird sie durch ein Prozessfluid aus einem Apparat gebildet, der einen Kältebedarf aufweist, zum Beispiel aus einem Luft-, Stickstoff- oder Erdgas-Verflüssiger; in diesem Fall tritt das Hochdruck-Speicherfluid in indirekten Wärmeaustausch mit der Wärmequelle, nämlich dem Prozessfluid. Auch atmosphärische Luft oder Prozessdampf kann als Wärmequelle eingesetzt werden.

Selbstverständlich können verschiedene Wärmequellen für dasselbe Hochdruck-Speicherfluid verwendet werden.

Das gasförmige Hochdruck-Speicherfluid 10 wird in einem ersten Schritt in einem Heißgasturbinen-System 400 arbeitsleistend entspannt, und zwar auf einen Zwischendruck von beispielsweise 20 bar, wobei mechanische Energie erzeugt wird. Unter diesem Zwischendruck wird das Speicherfluid 11 dann (gegebenenfalls vermischt mit einem weiteren Hochdruckgas 13) an das Gasturbinen-System weitergeleitet.

Das Heißgasturbinen-System 400 besteht in dem Beispiel der Figur 4 aus einer einzigen Turbinenstufe 401, die an einen Generator 403 gekoppelt ist. Der Turbinenstufe ist ein Erhitzer 405 vorgeschaltet, in dem das Speicherfluid durch indirekten Wärmeaustausch mit einem oder mehreren Heizfluiden 407 erhitzt wird. Ein weiterer Erhitzer kann dem Heißgasturbinen-System nachgeschaltet sein (nicht dargestellt). Alternativ könnte das Heißgasturbinen-System zwei- oder mehrstufig ausgebildet sein.

Die Hochdruckluft 11 wird stromabwärts des Verdampfers 8 (gegebenenfalls vermischt mit einem weiteren Strom 13) dem Gasturbinen-System (101, 102, 103) zugeleitet. Sie wird hier in die Leitung zwischen Gasturbinen-Verdichter 101 und Gasturbinen-Brennkammer 102 eingeführt. Mindestens ein Teil dieser zugespeisten Hochdruckluft nimmt an der Verbrennung in der Brennkammer teil und strömt anschließend als Verbrennungsabgas zum Gasturbinen-Expander 103. Dort wird mechanische Energie aus dem gasförmigen Hochdruck-Speicherfluid (10, 11) erzeugt, in dem dieser Hochdruck-Speicherfluid beziehungsweise aus ihm gewonnenes Verbrennungsabgas arbeitsleistend entspannt wird.

Das Verdampfungssystem 203 und das Heißgasturbinen-System 400 sind im ersten Betriebsmodus also in Betrieb, das Speichersystem 202 nicht. Die Ventile 150 und 151 sind geöffnet, das Ventil 152 ist geschlossen.

In dem zweiten Betriebsmodus fließen bei dem Ausführungsbeispiel die folgenden Energieströme in das System beziehungsweise aus dem System:
- Kälte 154 aus der Verdampfung des Speicherfluids 7, die an ein System mit Kältebedarf auf entsprechendem Niveau abgegeben werden kann
- Wärme 155 zum Verdampfer 8
- Wärme 156 zum Erhitzer 405
- Elektrische Energie 157 vom Generator 403 der Heißgas-Turbine 104
- Druckenergie über Leitung 13, falls diese vorhanden ist und genutzt wird
- Elektrische Energie 105 vom Generator 104 der Gasturbine
- Dampf 113 aus dem Dampferzeugungssystem, der in Dampfturbinen in mechanische und weiter in elektrische Energie umgewandelt werden kann.

Vor der Einleitung in das Gasturbinen-Kraftwerk kann bei Bedarf ein weiteres Hochdruckgas 13 zugemischt werden, zum Beispiel Luft aus einem Druckluftspeicher. Grundsätzlich ist es auch möglich ein Hochdruckgas 13, das aus einem Druckgasspeicher kommt) alleine einzusetzen, ohne dass ein tiefkaltes flüssiges Speicherfluid verdampft oder pseudo-verdampft wird.

In einer abweichenden Ausführungsform wird die Luftbehandlungsanlage 2 durch eine Tieftemperatur-Luftzerlegungsanlage gebildet, die Flüssigstickstoff als tiefkalte

Flüssigkeit 3 produziert. Das gasförmige Hochdruck-Speicherfluid 10 besteht in diesem Fall aus gasförmigem Hochdruck-Stickstoff (HD-GAN).

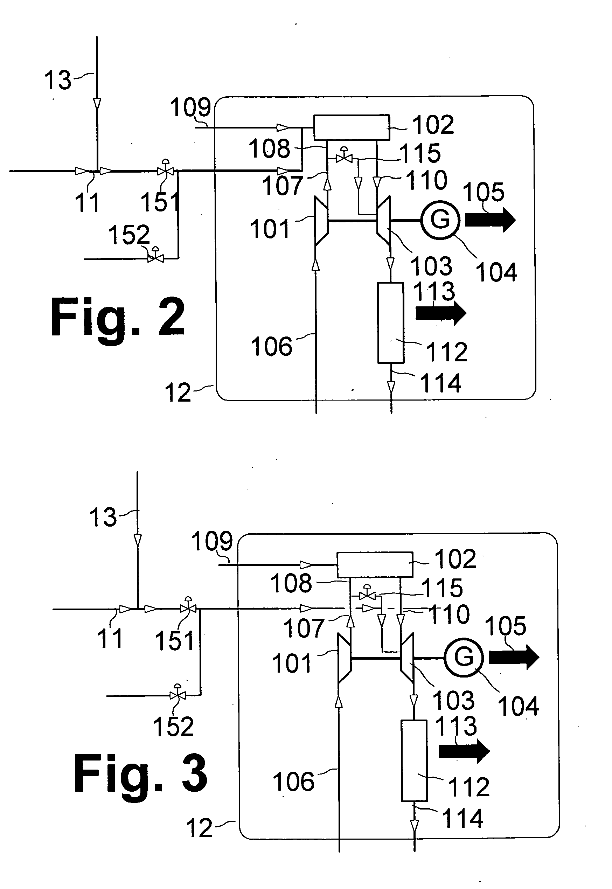

**Figur 2** zeigt eine zweite Ausführungsform, bei dem das Gasturbinen-Kraftwerk 12 in dem zweiten Betriebsmodus anders gefahren wird als in Figur 1 b. Das auf den Zwischendruck entspannte gasförmige Hochdruck-Fluid 11 wird - gegebenenfalls vermischt mit einem weiteren Hochdruckgas 13 - mindestens zum Teil mit dem Brennstoff 109 stromaufwärts der Brennkammer 102 vermischt.

In dem weiter abgewandelten Gasturbinen-Kraftwerk 12 der **Figur 3** wird die Hochdruckluft 11 direkt in die Bypassleitung 115 und damit unmittelbar in den Gasturbinen-Expander eingespeist.

## Patentansprüche

1. Verfahren zur Erzeugung elektrischer Energie in einem kombinierten System aus Gasturbinen-Kraftwerk und Luftbehandlungsanlage (2), wobei das Gasturbinen-Kraftwerk ein Gasturbinen-System mit Gasturbinen-Luftverdichter, Brennkammer, Gasturbinen-Expander und Generator aufweist und wobei in einem ersten Betriebsmodus
- in der Luftbehandlungsanlage aus Einsatzluft (1) ein Speicherfluid hergestellt wird, das weniger als 40 mol-% Sauerstoff enthält, und
- das Speicherfluid als tiefkalte Flüssigkeit (3) in einem Flüssigtank (4) gespeichert wird,
und in einem zweiten Betriebsmodus
- tiefkalte Flüssigkeit (5) aus dem Flüssigtank (4) entnommen und unter überatmosphärischem Druck verdampft oder pseudo-verdampft (8) wird, und aus dem dabei erzeugten gasförmigen Hochdruck-Speicherfluid (10, 11) mechanische Energie erzeugt wird, wobei mindestens ein Teil der erzeugten mechanischen Energie in elektrische Energie (105) umgewandelt wird,
**dadurch gekennzeichnet, dass** in dem ersten Betriebsmodus ein Teil der in dem Gasturbinen-Luftverdichter erzeugten Druckluft als Einsatzluft in der Luftbehandlungsanlage eingesetzt wird.

2. Verfahren nach Anspruch 1, **dadurch gekennzeichnet, dass** mindestens ein Teil der Erzeugung mechanischer Energie aus dem gasförmigen Hochdruck-Speicherfluid (10, 11) in dem Gasturbinen-Expander (103) eines Gasturbinen-Systems (101, 102, 103) eines Gasturbinen-Kraftwerks (12, 12a, 12b, 12c) durchgeführt wird, wobei das Speicherfluid (10, 11) stromabwärts des (Pseudo-)Verdampfens (8) dem Gasturbinen-System (101, 102, 103) zugeleitet wird.

3. Verfahren nach Anspruch 1 oder 2, **dadurch gekennzeichnet, dass** die Erzeugung mechanischer Energie aus dem gasförmigen Hochdruck-Speicherfluid mindestens teilweise als arbeitsleistende Entspannung in einem Heißgasturbinen-System (400) durchgeführt wird, das mindestens einen Erhitzer (405, 406, 407) und eine Heißgasturbine (401, 402) aufweist.

4. Verfahren nach Anspruch 2 und 3, **dadurch gekennzeichnet**, die Erzeugung mechanischer Energie aus dem gasförmigen Hochdruck-Speicherfluid in zwei Schritten vorgenommen wird, wobei der erste Schritt als arbeitsleistende Entspannung in einem Heißgasturbinen-System (400) durchgeführt wird und der zweite Schritt durch das Gasturbinen-System (101, 102, 103) gebildet wird, wobei das gasförmige Hochdruck-Speicherfluid (10) dem Heißgasturbinen-System (400) zugeleitet und dort auf einen Zwischendruck entspannt wird, und dem Heißgasturbinen-System (400) ein gasförmiges Zwischendruck-Speicherfluid (11) entnommen, das schließlich dem Gasturbinen-System (101, 102. 103) zugeleitet wird.

5. Verfahren nach Ansprüche 2 oder 4, **dadurch gekennzeichnet, dass** das gasförmige Speicherfluid (10, 11) dem Gasturbinen-System stromaufwärts der Brennkammer (102) zugeführt wird, indem das gasförmige Speicherfluid (11) mit Verbrennungsluft (107) aus dem Gasturbinen-Verdichter (101) oder mit Brennstoff (109) für die Brennkammer (102) vermischt wird.

6. Verfahren nach einem der Ansprüche 2, 4 oder 5, **dadurch gekennzeichnet, dass** das gasförmige Speicherfluid (10, 11) dem Gasturbinen-System (103) stromabwärts der Brennkammer (102) zugeführt (115) wird.

7. Verfahren nach einem der Ansprüche 1 bis 4, **dadurch gekennzeichnet, dass** die Luftbehandlungsanlage (2) als Tieftemperatur-Luftzerlegungsanlage oder als Luftverflüssigungsanlage ausgebildet ist.

8. Verfahren nach einem der Ansprüche 1 bis 5, **dadurch gekennzeichnet, dass** die tiefkalte Flüssigkeit (3) durch verflüssigte Luft oder Flüssigstickstoff gebildet wird.

9. Vorrichtung zur Erzeugung elektrischer Energie mit einem kombinierten System aus Gasturbinen-Kraftwerk und Luftbehandlungsanlage (2),
- wobei das Gasturbinen- Kraftwerk ein Gasturbinen-System mit Gasturbinen-Luftverdichter, Brennkammer, Gasturbinen-Expander und Generator aufweist, und
- die Luftbehandlungslage Mittel zum Erzeugen eines Speicherfluids aufweist, das weniger als 40 mol-% Sauerstoff enthält,
- mit einem Flüssigtank (4) zum Speichern des Speicherfluids als tiefkalte Flüssigkeit (3),
- mit Mitteln zum Entnehmen tiefkalter Flüssigkeit (5) aus dem Flüssigtank (4) entnommen,
- mit Mitteln (8) zum Verdampfen oder Pseudo-Verdampfen der entnommenen tiefkalten Flüssigkeit (7) unter überatmosphärischem Druck und zum Erzeugen eines gasförmigen Hochdruck-Speicherfluids (10, 11)
- mit Mitteln zum Erzeugen mechanischer Energie aus dem gasförmigen Hochdruck-Speicherfluids (10, 11), in denen mindestens ein Teil der erzeugten mechanischen Energie in elektrische Energie (105) umgewandelt wird,
**gekennzeichnet durch** Regelungsmittel zum Umschalten der Vorrichtung zwischen dem ersten Betriebsmodus und dem zweiten Betriebsmodus gemäß dem Verfahren nach Anspruch 1.
